# EUROPÄISCHE PATENTANMELDUNG

(11) **EP 1 256 787 A1**
(43) Veröffentlichungstag der Anmeldung: **13.11.2002**
(21) Anmeldenummer: 01111395.8
(22) Anmeldetag: 10.05.2001
(51) Int. Cl.: G01F 23/292, G01K 11/32, G01F 23/22, G01F 23/04

(54) **Optischer Oelmessstab**

(71) Anmelder: Ford Global Technologies, Inc., A subsidiary of Ford Motor Company, Dearborn, Michigan 48126 (US)
(72) Erfinder: Martin, Thomas, 50259 Pulheim (DE)
(74) Vertreter: Drömer, Hans-Carsten, Dipl.-Ing.

(57) **Zusammenfassung**

Die Erfindung bezieht sich auf ein Anzeigesystem für Flüssigkeitsstände, enthaltend zwei oder mehrere optische und/oder wärmeleitende Fasern, vorzugsweise dazu geeignet den Flüssigkeitsstand eines Schmiermittels bei Hubkolbenbrennkraftmaschinen anzuzeigen. Die Fasern sind dabei entweder mit einer sich unter Wärme in den optischen Eigenschaften verändernden Substanz am Ende versehen oder enthalten Kammern, die mit einer entsprechenden Substanz gefüllt sind.

## Beschreibung

### Flüssigkeitsstandanzeige

Die Erfindung bezieht sich auf ein Anzeigesystem für Flüssigkeitsstände, enthaltend zwei oder mehrere optische oder wärmeleitende Fasern, vorzugsweise dazu geeignet den Flüssigkeitsstand von Schmiermitteln bei Hubkolbenbrennkraftmaschinen anzuzeigen.

Eine Flüssigkeitsstandanzeige mittels optischer Fasern ist bekannt aus der JP 63284423. Dabei wird ein Bündel von optischen Fasern unterschiedlicher Länge, die an der Flüssigkeitsseite unter 45° angeschrägt sind, dazu benutzt den Flüssigkeitsstand in einem Behälter anzuzeigen. Dabei wird die Änderung des Brechungsindexes ausgenutzt, der eine in einer Flüssigkeit befindliche Faser dunkel, eine außerhalb einer Flüssigkeit befindliche Faser dagegen hell erscheinen läßt. Das Faserbündel wird dann zu einem geeigneten, auf der Oberfläche der Hubkolbenbrennkraftmaschine befindlichen, Punkt geführt, so daß der oben beschriebene Effekt leicht erkennbar ist.

Diese bekannten Einrichtungen weisen zwei Nachteile auf. Zum einen weisen Schmiermittel von Hubkolbenbrennkraftmaschinen ein ausgeprägtes Benetzungsvermögen auf, so daß an sich bereits nicht mehr in der Flüssigkeit befindlichen Fasern Schmierstoffreste verbleiben können und so das Meßergebnis verfälschen.

Zum anderen sind die Lichtverhältnisse innerhalb von Hubkolbenbrennkraftmaschinen sehr oft beschränkt, so daß ein Ablesen des Flüssigkeitsstandes erschwert oder unmöglich ist. Dieser bekannte Nachteil wird bisher dadurch ausgeglichen, daß eine Fremdlichtquelle, meistens in Kombination mit einem sattelförmigen Anschliff der Fasern, verwendet wird. Dies erhöht jedoch die Anzahl der benötigten Teile und die Kosten deutlich.

Vor diesem Hintergrund ist es die Aufgabe der vorliegenden Erfindung, eine Flüssigkeitsstandanzeige derart zu verbessern, daß sie gegenüber dem Benetzen durch eine Flüssigkeit unempfindlicher wird und außerdem einen geringeren Fremdlichtbedarf aufweist.

Diese Aufgabe wird erfindungsgemäß durch eine Flüssigkeitsstandanzeige mit den Merkmalen des Anspruches 1 gelöst. Weitere vorteilhafte Ausgestaltungen sind in den Nebenansprüchen bzw. den Unteransprüchen enthalten.

Dadurch, daß das optische Faserbündel am flüssigkeitsseitigen Ende mit einer Substanz versehen ist, die unter Wärme ihre optischen Eigenschaften ändert, werden während des Betriebes oder direkt nach dem Betrieb einer Hubkolbenbrennkraftmaschine die Fasern, die in das Schmiermittel hineinreichen, durch die Betriebswärme des Schmiermittels einer Hubkolbenbrennkraftmaschine ihre optischen Eigenschaften ändern und somit den Flüssigkeitsstand des Schmiermittels anzeigen. Bei Gebrauch von zwei Fasern unterschiedlicher Länge kann so der minimale und maximale Flüssigkeitsstand angezeigt werden. Bei Benutzung mehrerer Fasern unterschiedlicher abgestufter Länge ist eine differenzierte Aussage über den Flüssigkeitsstand möglich.

Eine weitere Ausführung der vorliegenden Erfindung besteht darin, daß die Fasern der Flüssigkeitsstandanzeige am flüssigkeitsseitigen Ende je eine Kammer enthalten, die mit einer sich unter Wärmeeinwirkung in den optischen Eigenschaften verändernden Substanz, vorzugsweise einem Metallsalz, gefüllt ist. Dadurch wird verhindert, daß die oben erwähnte Substanz durch Alterung, Verschleiß o. Ä. verloren geht.

In einer weiteren Ausgestaltung der Erfindung bestehen die Fasern aus wärmeleitendem Material, die mit einer sich unter Wärmeeinwirkung in den optischen Eigenschaften verändernden Substanz am sichtseitigen Ende versehen sind. In diesem Falle sind die einzelnen Fasern gegeneinander thermisch isoliert, so daß die sich in der Flüssigkeit befindlichen Fasern die Wärme an einen geeigneten Punkt an der Oberfläche der Hubkolbenbrennkraftmaschine leiten können, so daß die optische Reaktion der oben genannten Substanz leichter sichtbar wird.

Bei einer weiteren vorteilhaften Ausführung enthalten die wärmeleitenden Fasern am sichtseitigen Ende je eine Kammer, die mit einer sich unter Wärmeeinwirkung in den optischen Eigenschaften verändernden Substanz, vorzugsweise einem Metallsalz, gefüllt und mit einem transparenten Deckel verschlossen ist.

Bei einer weiteren vorteilhaften Ausgestaltung der Erfindung bestehen die Fasern aus einem optisch und gleichzeitig thermisch leitfähigen Material. Die Fasern sind dabei am flüssigkeitsseitigen Ende mit einer Substanz versehen ist, die unter Wärme ihre optischen Eigenschaften ändert und enthalten am sichtseitigen Ende je eine Kammer, die mit einer sich unter Wärmeeinwirkung in den optischen Eigenschaften verändernden Substanz, vorzugsweise einem Metallsalz, gefüllt und mit einem transparenten Deckel verschlossen ist. Unter Wärmeeinwirkung tritt eine Änderung der optischen Eigenschaften sowohl am flüssigkeitsseitigen als auch am sichtseitigen Ende auf was zu einer Kontrastverstärkung führt, die wiederum ein einfacheres Ablesen ermöglicht.

In einer weiteren vorteilhaften Ausführung wird die Flüssigkeitsstandanzeige so dimensioniert, daß ein vorhandener Schmiermittelpeilstab einer Hubkolbenbrennkraftmaschine ersetzt werden kann. Dabei wird das sichtseitige Ende der Fasern in eine Dichtplatte integriert sowie die Fasern so ausgelegt, daß ein vorhandenes Führungsrohr benutzt werden kann.

In einer weitern Ausgestaltung der Erfindung können die oben genannten Ausführungen weiter verbessert werden, indem am flüssigkeitsseitigen Ende eine Schutzkappe angebracht wird. Diese Schutzkappe ist für Flüssigkeiten durchlässig, so daß der tatsächliche Flüssigkeitsstand an den erfindungsgemäßen Faserenden anliegt. Dadurch soll verhindert werden, daß Flüssigkeitsspritzer an die Fasern oberhalb des Flüssigkeitsniveaus gelangen und so das Meßergebnis verfälschen.

Ein vorteilhafte Ausführung der Schutzkappe ist mit Markierungen versehen, die den heute bekannten Markierungen an Ölpeilstäben für Hubkolbenbrennkraftmaschinen zur Bestimmung des Schmiermittelniveaus entsprechen.

Eine weitere vorteilhafte Ausführungsform sieht vor, die sichtseitigen Faserenden bis in den Fahrgastraum zu führen, so daß ein Ablesen des Flüssigkeitsstandes während des Betriebes bzw. ohne Öffnen des Motorraumes möglich ist.

Die Erfindung wird anhand in den beiliegenden Zeichnungen gezeigter Ausführungsbeispiele näher erläutert. Es zeigen
- Fig. 1: eine schematische Seitenansicht der erfindungsgemäßen Flüssigkeitsstandanzeige mit optischen Fasern;
- Fig. 2: eine schematische Ansicht der Sichtseite der Flüssigkeitsstandanzeige in Richtung des Pfeils I in Fig.1, bei der sich alle Faserenden in der Flüssigkeit befinden;
- Fig. 3: eine schematische Ansicht der Sichtseite der Flüssigkeitsstandanzeige in Richtung des Pfeils I in Fig.1, bei der sich einige Faserenden in der Flüssigkeit befinden;
- Fig. 4: eine schematische Ansicht der Sichtseite der Flüssigkeitsstandanzeige in Richtung des Pfeils I in Fig.1, bei der sich kein Faserende in der Flüssigkeit befindet;
- Fig. 5: eine schematische Seitenansicht der erfindungsgemäßen Flüssigkeitsstandanzeige mit wärmeleitenden Fasern;
- Fig. 6: eine schematische Seitenansicht der erfindungsgemäßen Flüssigkeitsstandanzeige mit optisch- und thermischleitenden Fasern;
- Fig. 7: eine schematische Seitenansicht der erfindungsgemäßen Flüssigkeitsstandanzeige mit wärmeleitenden Fasern und zusätzlicher Schutzkappe;
- Fig. 8: eine schematische Seitenansicht der erfindungsgemäßen Flüssigkeitsstandanzeige mit optisch- und thermischleitenden Fasern und zusätzlicher Schutzkappe mit Markierungen;
- Fig. 9: eine schematische Ansicht der erfindungsgemäßen Flüssigkeitsstandanzeige, bei der die sichtseitigen Faserenden bis in den Fahrgastraum geführt sind.

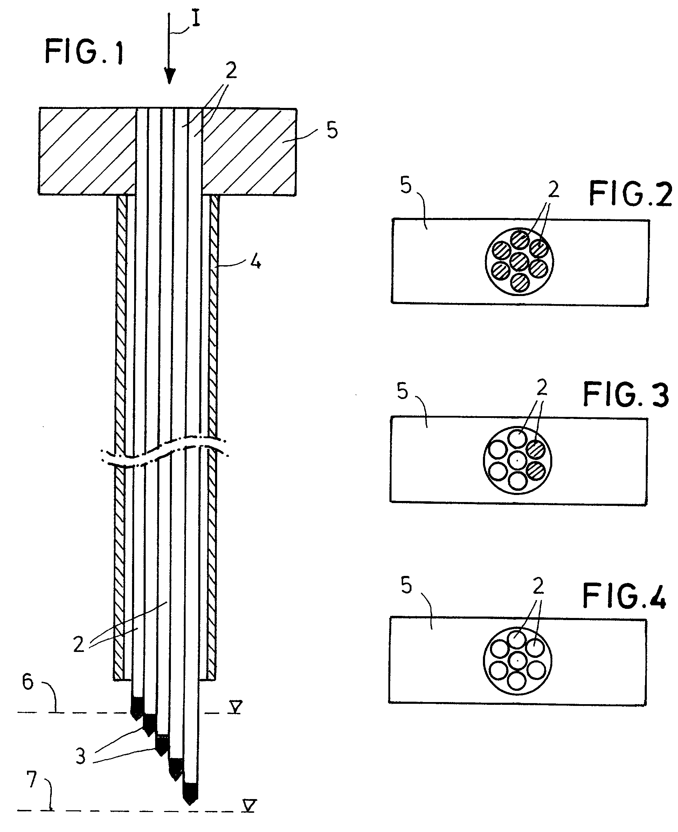

In den Figuren 1 bis 9 sind übereinstimmende Bauteile mit den gleichen Bezugszeichen versehen.

In Figur 1 ist eine erfindungsgemäße Flüssigkeitsstandanzeige 1 in der Seitenansicht dargestellt. Zu erkennen sind die optischen Fasern 2, die mit einer Substanz versehenen Enden 3, ein Führungsrohr 4, eine Verschlußplatte 5 sowie einen angenommenen maximalen und minimalen Flüssigkeitsstand 6, 7, jeweils durch eine gestrichelte Linie angedeutet. Bei maximalem Flüssigkeitsstand 6,7 befinden sich alle Fasern 2 mit ihrem reaktiven Ende in der Flüssigkeit. Bei erwärmter Flüssigkeit erfolgt nun eine optische Reaktion. Diese Veränderung ist dann für einen Betrachter von außen sichtbar, wenn er in Pfeilrichtung I auf das Verschlußende 5 schaut. Es ergibt sich dann ein Bild, wie es in Fig. 2 zu sehen ist. Fig. 3 und 4 zeigen dieselbe Ansicht für einen geringeren bzw. minimalen Flüssigkeitsstand.

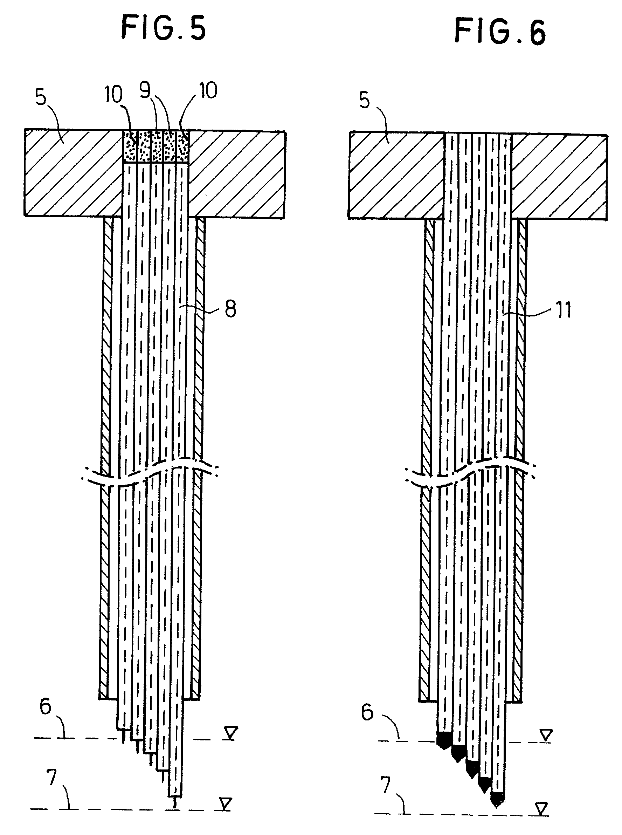

Figur 5 zeigt eine Seitenansicht der erfindungsgemäßen Flüssigkeitsstandanzeige 1 mit wärmeleitenden Fasern 8. In diesem Falle leiten die in der Flüssigkeit befindlichen Fasern 2 die Wärme zu den mit einer Substanz 9 gefüllten Kammern 10. Auch hier läßt somit die Änderung der optischen Eigenschaften einen Rückschluß auf den Flüssigkeitsstand zu.

Figur 6 zeigt eine Seitenansicht der erfindungsgemäßen Flüssigkeitsstandanzeige 1 mit optisch- und thermisch leitenden Fasern 11.

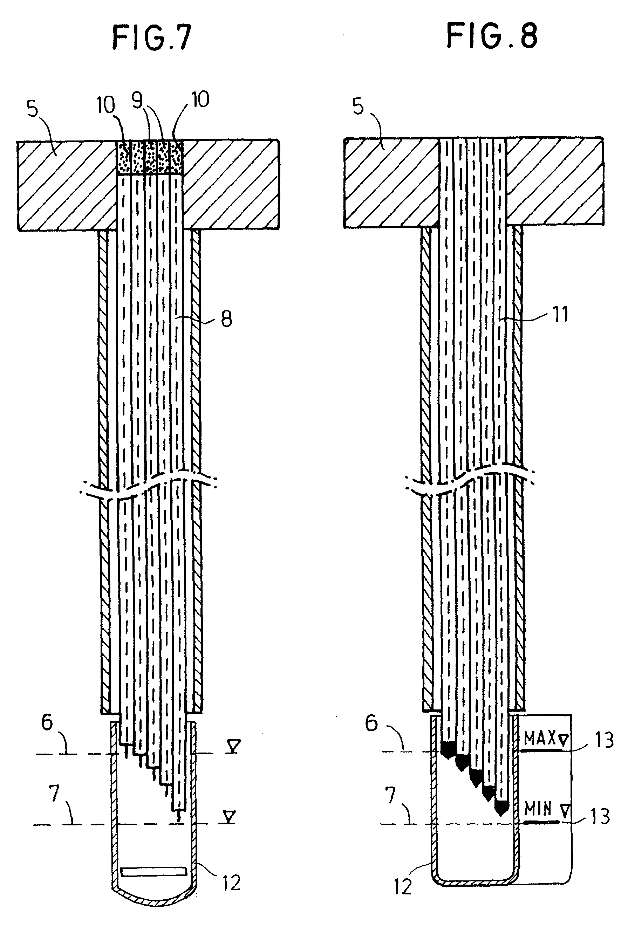

In Figur 7 ist die Variante aus Figur 5 mit einer zusätzlichen Schutzkappe 12 versehen.

Figur 8 zeigt die erfindungsgemäße Flüssigkeitsstandanzeige 1 mit optisch- und thermisch leitenden Fasern 11 und der Schutzkappe 12, die wiederum mit Markierungen 13 zur Bestimmung des Flüssigkeitsstandes versehen ist.

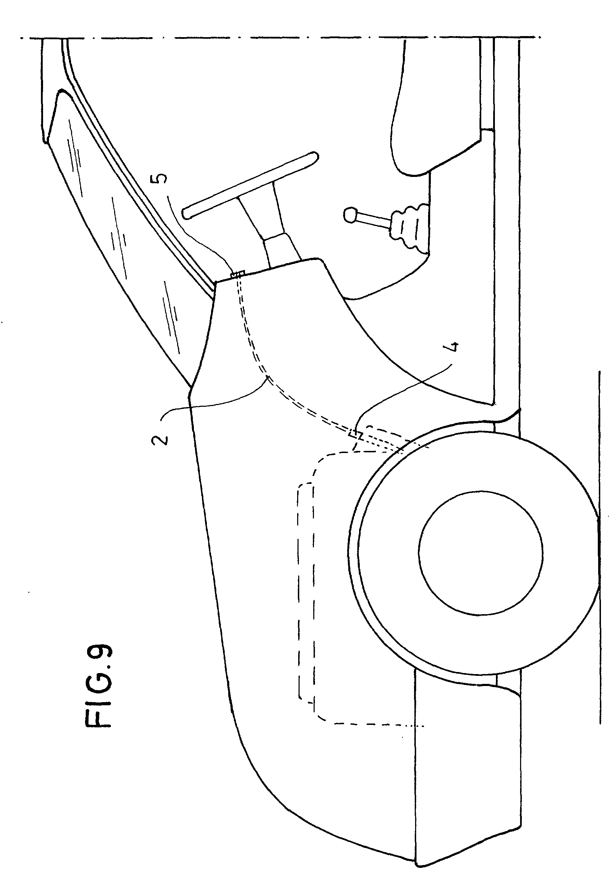

Figur 9 zeigt eine Ansicht der erfindungsgemäßen Flüssigkeitsstandanzeige 1 bei der das Sichtende bis in den Fahrgastraum geführt worden ist.

## Patentansprüche

1. Flüssigkeitsstandanzeige (1), vor allem für Schmiermittel in Hubkolbenbrennkraftmaschinen, mit zwei oder mehr optisch leitenden Fasern (2),
**dadurch gekennzeichnet, daß**
jede Faser (2) mit einer sich unter Wärmeeinwirkung in den optischen Eigenschaften verändernden Substanz (3) am meßseitigen Ende versehen ist.

2. Flüssigkeitsstandanzeige (1), vor allem für Schmiermittel in Hubkolbenbrennkraftmaschinen, mit zwei oder mehr optisch leitenden Fasern (2),
**dadurch gekennzeichnet, daß**
jede Faser (2) auf ihrem flüssigkeitsseitigen Ende eine Kammer (10) aufweist, die mit einer sich unter Wärmeeinwirkung in den optischen Eigenschaften verändernden Substanz (3) gefüllt ist.

3. Flüssigkeitsstandanzeige (1), vor allem für Schmiermittel in Hubkolbenbrennkraftmaschinen, mit zwei oder mehr wärmeleitenden Fasern (8),
**dadurch gekennzeichnet, daß**
jede Faser (8) mit einer sich unter Wärmeeinwirkung in den optischen Eigenschaften verändernden Substanz am anzeigeseitigen Ende versehen ist.

4. Flüssigkeitsstandanzeige (1), vor allem für Schmiermittel in Hubkolbenbrennkraftmaschinen, mit zwei oder mehr wärmeleitenden Fasern (8),
**dadurch gekennzeichnet, daß**
jede Faser (8) auf ihrem anzeigeseitigen Ende in einer Kammer (10) endet, die mit einer sich unter Wärmeeinwirkung in den optischen Eigenschaften verändernden Substanz (9) gefüllt ist.

5. Flüssigkeitsstandanzeige (1), vor allem für Schmiermittel in Hubkolbenbrennkraftmaschinen, mit zwei oder mehr optisch und wärmeleitenden Fasern (11),
**dadurch gekennzeichnet, daß**
jede Faser (11) mit einer sich unter Wärmeeinwirkung in den optischen Eigenschaften verändernden Substanz (3) am flüssigkeitsseitigen Ende versehen ist und jede Faser am anzeigeseitigen Ende in einer Kammer (10) endet, die mit einer sich unter Wärmeeinwirkung in den optischen Eigenschaften verändernden Substanz (9) gefüllt ist.

6. Flüssigkeitsstandanzeige (1) nach einem der Ansprüche 1 bis 5,
**dadurch gekennzeichnet, daß**
die Flüssigkeitsstandanzeige (1) so dimensioniert ist, daß ein vorhandener Flüssigkeitsstandpeilstab ersetzt werden kann.

7. Flüssigkeitsstandanzeige (1) nach Anspruch 1 bis 6,
**dadurch gekennzeichnet, daß**
an der Flüssigkeitsstandanzeige eine Schutzkappe (12) angebracht ist.

8. Flüssigkeitsstandanzeige (1) nach Anspruch 7,
**dadurch gekennzeichnet, daß**
an der Schutzkappe (12) eine oder mehrere Markierungen (13) angebracht sind.

9. Flüssigkeitsstandanzeige (1) nach einem der Ansprüche 1 bis 5,
**dadurch gekennzeichnet, daß**
die Flüssigkeitsstandanzeige (1) so dimensioniert ist, daß das Sichtende im Fahrgastraum angebracht ist.
